# EUROPEAN PATENT SPECIFICATION

(11) **EP 0 427 513 B1**
(45) Date of publication and mention of the grant of the patent: **28.09.1994**
(21) Application number: 90312140.8
(22) Date of filing: 06.11.1990
(51) Int. Cl.: B65D 75/32

(54) **Reclosable snap tab food packaging**
Wiederverschliessbare Lebensmittelverpackung mit Schnappverschluss
Emballage alimentaire renfermable par encliquetage

(30) Priority: 09.11.1989 US 434873
(43) Date of publication of application: 15.05.1991
(73) Proprietor: OSCAR MAYER FOODS CORPORATION, Madison Wisconsin 53707 (US)
(72) Inventor: Hustad, Gerald O., McFarland, Wisconsin 53558 (US); Grindrod, Paul E., Madison, Wisconsin 53704 (US)
(74) Representative: Eyles, Christopher Thomas

(56) References cited:
- EP-A- 0 117 673
- EP-A- 0 222 558
- EP-A- 0 367 603
- SE-A- 436 415
- US-A- 4 498 589

## Description

### Background and Description of the Invention

The present invention generally relates to food packaging containers and method of forming the containers including locking members for snap locking together a base member thereof and a body member thereof. More particularly, the snap locking members include at least one mating pair of projections such that one of the projections of the pair enters into and snappingly engages the other of said projections of the pair. Preferably, the projections are subjected to crimping after they have been thermoformed into the package members, which causes an audible snap when the food packaging container is closed by pressing the package base member and body member together. The projection pair or pairs are formed in the peripheral flanges of the base member and body member and at a location that is spaced outwardly from a peelable hermetic seal of the food packaging container.

Food packaging containers of the type that include a semi-rigid and/or thermoformed base member and a body member having a bubble portion for defining a cavity that encloses a food product are well known. Packaging containers of this type have long been used for merchandising packaged foods such as sliced luncheon meats, cheeses and the like. In these types of packaging containers, the food product is hermetically sealed inside the cavity under vacuum packaging conditions in a manner well known in the art. At times, mechanical pressure may be used in order to generally shape or form the food to the package cavity.

A desired objective of many of these types of packaging containers is to provide a food packaging container that is resealable, at least to the extent that the base and body or bubble portion will be readily reclosed after the hermetic seal has been broken and the package has been opened, typically to remove a portion of the food product within the cavity. Attempts in this regard have included the use of pressure sensitive adhesives which remain tacky through a number of openings and closings.

At times, consumers desire a re-securement arrangement that is more readily detectable and more positive-acting. Prior attempts to meet this desire have including various interengaging profiles wherein a component of the base portion generally lockingly engages another component of the body or bubble portion of the food packaging container. These attempts have met with a varied degree of success. One difficulty with some of these structures is the problem of knowing when proper alignment of the interengaging profiles has been achieved so that the interlocking engagement for which the package is designed will be achieved without requiring a great deal of care and attention on the part of the consumer. This can be particularly important for consumers who either do not possess the keen eyesight that might be needed to check that interlocking profiles have been fully engaged. This can also be important in that a typical consumer would like to be assured that the proper degree of interengagement has been achieved by proceeding with what might amount to only casual resealing action, rather than the need to proceed with a studied and careful procedure.

One such approach that can be used in informing the consumer that the designed extent of reclosure has been accomplished is to provide an audible snapping sound which informs the consumer that the package has been reclosed. For merchandising food packaging containers it is essential that any such reclosure means may readily be combined with packaging wherein the packaged foods are formed to the package with vacuum and often also with mechanical pressure.

EP-A-0367603, which forms part of the prior art under the provisions of Article 54(3) EPC, pertains to a recloseable package having a body member, a base, a hermetic seal between the body member and base and snap locking projections in the side walls of the body member and base, which can be constructed to provide an audible snap sound upon closure. EP-A-0222558 discloses a recloseable food package of deformable, semi-rigid plastic material with indents, forming a locking means, formed into the package container body and closure member simultaneously after filling and sealing to ensure that both the body container and closure member snap together to close the package after opening.

It is accordingly a general object of the present invention to provide an improved food packaging container and method of forming the same.

Another object of this invention is to provide an improved food packaging container and method of forming same, which container incorporates at least a pair, and preferably pairs, of flange area projections that effect an audible snap when the food packaging container is reclosed.

Another object of the present invention is to provide an improved food packaging container and method of making same which provide a positive and clear signal to the consumer that the package has been reclosed.

Another object of this invention is to provide an improved food packaging container and method of making same, which container can be readily reclosed without requiring a great deal of time, skill or attention on the part of the consumer, which can be further facilitated by a hinge assembly.

Another object of the present invention is to provide an improved food packaging container and method of making same, which incorporates reclosure members that do not substantially increase the cost of the container and that are readily visible from the front of the container.

Accordingly, the present invention provides a food packaging container, comprising:
a base member, having a panel portion for supporting a food product and a peripheral flange portion generally surrounding said base member panel portion;
a body member having a bubble portion for cooperating with the base member panel portion to define a cavity to fully enclose the food product therewithin, said body member further including a peripheral flange portion generally surrounding said body member bubble portion;
peelable sealing means to provide a hermetic sealing of the base member peripheral flange portion to the body member peripheral flange portion after the food product is filled into the cavity, said peelable sealing means providing a perimeter that is generally closely spaced outside of said cavity; and
locking means for snap locking said base member to said body member, said locking means including at least one pair of projections, one of said pair of projections having been thermoformed into said base member peripheral flange and the other of said projections having been thermoformed into said body member peripheral flange, said body member projection and said base member projection being in registry with each other at a location outside of said peelable sealing means, one of said projections is an insertion projection, and another of said projections is a receptor projection for receiving and entering into snapping engagement with said insertion projection, said pair of projections providing for reclosure of the food packaging container, which reclosure is signalled by an audible snapping sound generated by reinsertion of said insertion projection into receptor projection. It further provides a method for producing such packages.

The present invention responds to a need in the art for food packaging containers which are easily openable and easily reclosable in a positive manner to the extent that the consumer is provided with an audible sound signifying that the package has been reclosed in order to provide at least a perception of freshness preservation. In addition, the reclosing is easily accomplished without requiring close visual study or careful attention by the consumer. This packaging thus provides the consumer with a clear signal that reclosure has been accomplished to ensure that the cavity will not be inadvertently opened and to provide a non-hermetic barrier for retarding deterioration of the food product within the cavity.

In summary, the food packaging container according to the present invention includes a base and a body which together define a bubble enclosure that provides a cavity within which the food product is tightly enclosed. The food is hermetically sealed within the cavity by suitably peelable sealing means. Peripheral flanges of the base and body are positioned outside of the cavity and peelable sealing means, and locking means for snap locking the peripheral flanges together are formed therewithin. The locking means includes at least one pair of projections positioned on the base and on the body. These projections are in registry with each other when the base and body are hermetically sealed to each other. After the package has been opened, this registry is easily re-established, at which time one of the projections enters into the other one, and an audible snap will sound when reinsertion has been accomplished. Preferably, the projections are thermoformed into the package base and body, and they are of an adequate size to allow crimping thereof either before or after filling and sealing of the food packaging container. Post-thermoforming crimping of the projections causes or at least greatly enhances the audible snapping sound which is experienced when the base and body are pressed together.

These and other objects, features and advantages of the present invention will be clearly understood through a consideration of the following detailed description.

### Brief Description of the Drawings

In the course of this description, reference will be made to the attached drawings, wherein:
Figure 1 is an exploded perspective view of a preferred food packaging container according to the present invention;
Figure 2 is an exploded cross-sectional view along the line 2-2 of Figure 1;
Figure 3 is a plan view of the base member of the food packaging container shown in Figure 1;
Figure 4 is an exploded perspective view of an alternative embodiment of a food packaging container according to the present invention;
Figure 5 is a plan cross-sectional view of the locking means, as assembled, of the embodiment illustrated in Figure 4;
Figure 6 is a perspective view of another embodiment according to the present invention; and
Figures 7a, 7b, 7c and 7d are plan views of other alternative embodiments of locking means for incorporation into food packaging containers according to the present invention.

### Description of the Particular Embodiments

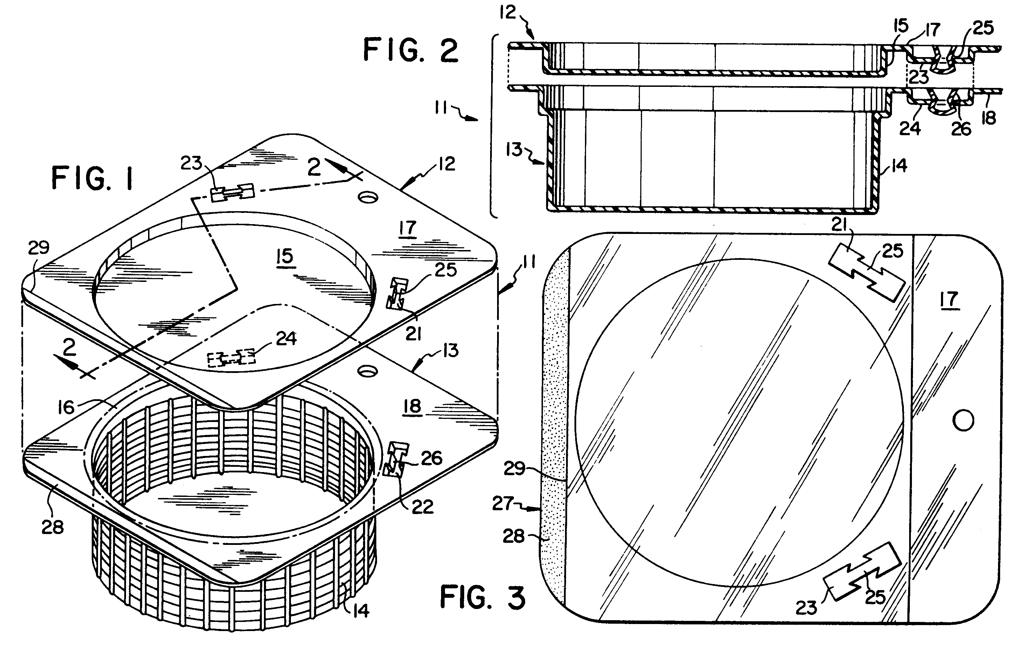

The food packaging container, generally designated as 11, which is shown in Figures 1, 2 and 3 includes a base member, generally designated as 12, and a body member, generally designated as 13. Body member 13 includes a bubble portion 14, and food product such as a stack of luncheon meat or cheese slices or the like (not shown), is tightly enclosed by and between the bubble portion 14 and a panel portion 15 of the base member 12. In this illustrated embodiment, the panel portion 15 takes the form of a pedestal which generally nests within the mouth opening of the bubble portion 14.

A peelable seal 16 is provided, typically in close proximity to the bubble portion 14, and this peelable seal 16 can be of a generally known construction and/or character so that a vacuum seal condition is maintained within the food packaging container 11 until opening thereof is effected. Typically, the peelable seal 16 will be generally along or spaced closely from the inside perimeter of a peripheral flange 17 of the base member 12 and a peripheral flange 18 of the body member 13.

At least one pair of telescoping and interengaging projections (two pairs being visible in Figure 1) are provided in the peripheral flanges 17 and 18. In each case, one projection of each pair is formed in the base member 12, and the other is formed in the body member 13. One illustrated pair includes base member projection 21 and body member projection 22. The other illustrated pair consists of base member projection 23 and body member projection 24. In this illustrated embodiment, the base member projections 21, 23 are insertion projections, and the body member projections 22, 24 are receptor projections that are generally hollow and closely receive the insertion projections which are generally protruding above the surface of the base member.

The base member 12 and the body member 13 are formed of a semi-rigid, pre-formed plastic material, and the projections 21, 22, 23 and 24 are thermoformed therewithin and at a location at least 1/8 [3.2 mm] away from the cavity area and outside of the peelable seal 16. Each projection has a height which is adequate (typically 1/16 inch [1.6 mm] or more, typically on the order of approximately 1/8 inch [3.2 mm] or more) in order to allow for crimping of the projections either before or after filling and sealing of the food packaging container 11. It is preferred that the crimping action be post-thermoforming and when the base member 12 and body member 13 are pressed together. The post-thermoforming crimping of the projections causes an audible snap when the body and base are pressed together.

The projections of this embodiment exhibit a general bowtie shape and provide a relatively large engagement interface and a shape that facilitates crimping thereof. With this type of structure, it is especially convenient to simultaneously crimp both neck portions 25 and 26 of a projection pair in order to provide especially suitable snap locking means having a reliable audible snap.

Also shown in this embodiment in order to assist in ease of package reclosing is the inclusion of a hinge assembly, generally designated as 27. A suitable hinge assembly 27 can include a permanent-type of glue or adhesive or heat seal 28 for joining respective ends of the base member 12 and body member 13 which are generally opposite from the projections 21, 22, 23, 24. A score line 29 is also preferably included in order to facilitate bending of the semi-rigid base member 12 and/or body member 13.

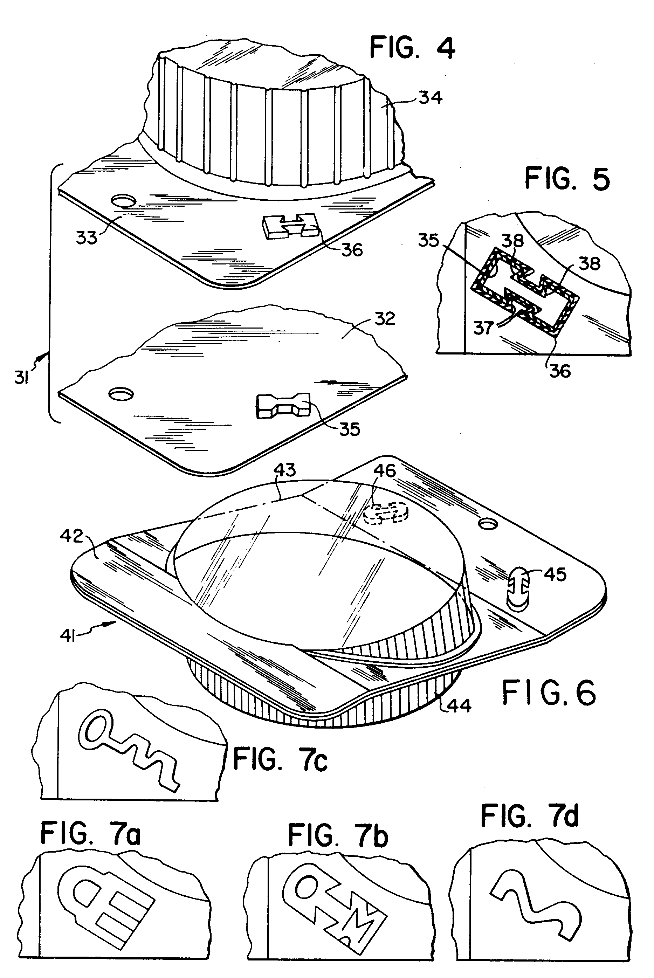

The food packaging container, generally designated as 31 in Figure 4, includes base member 32 and a body member 33 having a bubble portion 34. In this embodiment, base member projection 35 and body member projection 36 are not entirely identical in shape, and one of the projections is slightly wider than another projection in at least one dimension. In the arrangement illustrated in Figures 4 and 5, portions of the insertion projection 35 are slightly wider than the generally corresponding portions of the receptor projection 36. The base member projection 35 enters the receptor projection 36 in the body member 33. Totally non-impeded entry is not possible due to the positioning of protruding wings 37 of the body member projection 36, while corresponding wings are not included in the base member projection 35. By this arrangement, a pinching action is achieved from top to bottom of the projections when the wall 38 slidably engages a protruding wing 37 whereby the protruding wing 37 and/or wall 38 deform to provide secure, pinching engagement therebetween. An audible snap condition can be enhanced by crimping as described in connection with the embodiment of Figures 1 through 3, if desired.

A variation of this type of pinching action snap feature is to form a receptor projection that is somewhat undersized (for example substantially the same size as the outer surface of the insertion projection) in order to achieve a very tight force fit. Crimping of the insertion projection can be accomplished in order to achieve an audible snap closing action.

The Figure 6 embodiment illustrates another general form which can be taken by a food packaging container, generally designated as 41. In this embodiment, there is less of a delineation between a base member and bubble member. This package provides a substantial hinge arrangement by including a hinge portion 42 joining body members 43 and 44 of generally equal volume. Projection pairs 45 and 46 are illustrated. As with all of the embodiments, the projecting pairs can include post thermoforming crimping, can exhibit a pinching action structure and/or can be characterized by a close interference fit.

In all of the illustrated embodiments, the insertion projection component of each pair may be either within the base member or body member, and the corresponding receptor projection component of the pair will be within the other member, whether the body member or the base member. A minimum of one such projection pair or as many as six or more such projection pairs may be provided in order to achieve the desired reclosable locking action.

The projection pairs may take on any number of various shapes. Typically these shapes will readily allow for crimping and/or for pinching action or interference fit as desired. Figure 7a shows a projection pair structure design modeled after a padlock. Figure 7b gives a structure on the order of that shown in the other embodiments, but also resembling a key providing the general outline of initials such as the illustrated "OM". Figure 7c provides another illustration of a multi-faceted projection pair shape which approximates that of the initials "OM". Figure 7d illustrates another shape of projection pairs.

With more particular reference to the method aspects of this invention, U.S. Patents No. 3,498,018, No. 4,411,122, No. 4,577,757 and No. 4,688,369, which are incorporated by reference hereinto, describe methods of forming a vacuumized, hermetically sealed package characterized by a predetermined quantity of product which is deformable and is arranged in the form of an upright mass on a pedestal having a sidewall and a peripheral flange for hermetic sealing to a corresponding peripheral flange of the body member. The food product will engage the end panel of the body member bubble, as well as its sidewall. The sidewall of the base panel pedestal telescopes into the bottom edges of the bubble sidewall.

In a typical method for filling this type of package, the body member is placed in an inverted position, such as generally illustrated in Figure 1 hereof, and sufficient quantity of product is placed thereinto so that the cavity will be substantially filled when the package is assembled. Then, the base member is positioned on the mouth of the bubble so that the pedestal telescopes into the bubble and engages the product. The flange margins of the base member overlie the corresponding margins of the body member. Mechanical pressure can be applied inwardly and onto the outside surface of the pedestal. The area defined by the bottom edges of the bubble sidewall can be sufficient to force the product into close contact with interior surfaces of the base and body members to shape the product to conform to the shape of the cavity and substantially completely fill the space between the cavity and product while vacuumizing the assembly and while sealing the package in a hermetic manner.

The projection pairs are formed in the peripheral flanges, preferably by thermoforming. Crimping can be accomplished before or after filling and sealing of the package. An audible snap is enhanced by post-thermoforming crimping of neck portions or the like of the projection pair(s).

When this invention is followed, reclosability and the ability of the package to then stay closed is achieved at low cost by providing one or more points of frictional interaction outside of the sealed area of the package. An audible snap sound is also provided which enhances the perception of freshness preservation once the package is opened. This invention can be applied to packages of any of various shapes, including those that are generally round and generally square or rectangular, and the bubble portions can take on needed product-conforming shapes. Also, the projection pairs are readily visible to the consumer, even from the front of the package, and they can present a pleasing appearance. To achieve easy opening of the peelable seal, high molecular weight polymer adhesives which are peelable and resealable may be used, or easy peel multi-layer rigid films that are heat sealable may be used.

With more particular reference to the preferred crimping procedure, crimping of the projections preferably occurs after the package is filled and sealed, and it occurs by applying pressure to one or both sides of the projection (or a portion of it such as the illustrated neck) in order to slightly deform it. Crimping might occur at room temperature, or heat may be applied to the surface of the crimped area and/or imparted thereto by the crimping device itself, in order to utilize solid state forming techniques.

In a typical food packaging container, the thickness of the bubble film is about 13 mil (0.33 mm) and the thickness of the base film is about 10 mil (0.25)mm). Exemplary bubble compositions include Barex 210 or polyethylene terephthalate. A suitable base composition can be Barex 210, polyvinyl chloride, or Saranex laminated to Barex 210 or polyvinyl chloride or polystyrene.

## Claims

1. A food packaging container (11;31;41), comprising:
a base member (12;32;43), having a panel portion (15) for supporting a food product and a peripheral flange portion (17) generally surrounding said base member panel portion;
a body member (13;33;44) having a bubble portion (14;34) for cooperating with the base member panel portion (15) to define a cavity to fully enclose the food product therewithin, said body member further including a peripheral flange portion (18) generally surrounding said body member bubble portion;
peelable sealing means (16) to provide a hermetic sealing of the base member peripheral flange portion (17) to the body member peripheral flange portion (18) after the food product is filled into the cavity, said peelable sealing means (16) providing a perimeter that is generally closely spaced outside of said cavity; and
locking means for snap locking said base member to said body member, said locking means including at least one pair of projections (21,22 or 23,24;35,36;45 or 46), one of said pair of projections having been thermoformed into said base member peripheral flange and the other of said projections having been thermoformed into said body member peripheral flange, said body member projection and said base member projection being in registry with each other at a location outside of said peelable sealing means, one of said projections (21,23;35) is an insertion projection, and another of said projections (22,24;36) is a receptor projection for receiving and entering into snapping engagement with said insertion projection, said pair of projections (21,22 or 23,24;35,36;45 or 46) providing for reclosure of the food packaging container, which reclosure is signalled by an audible snapping sound generated by reinsertion of said insertion projection (21,23;25) into receptor projection (22,24;26).

2. A food packaging container according to claim 1, wherein at least said insertion projection (21,23;35) includes a crimped portion.

3. A food packaging container according to claim 1 or claim 2, wherein each of said receptor projection (22,24;36) and said insertion projection (21,23;35) includes a crimped portion.

4. A food packaging container according to claim 1, further comprising:
a crimped portion of each of said receptor projection (22,24;36) and said insertion projection (21,23;35), one of said crimped portions being insertable into another of said crimped portions, which insertion is accompanied by an audible snapping signal.

5. A food packaging container according to any one of claims 2 to 4, wherein said crimped portions were formed in said thermoformed projections by crimping action when said base member (12;32;43) and body member (13;33;44) are assembled together into the container.

6. A food packaging container according to any one of claims 3 to 5, wherein each of said crimped portions is a substantially central portion of the respective projection.

7. A food packaging container according to any one of claims 1 to 6, wherein each of said projections (21,22 or 23,24) has a general bowtie shape including a crimped central neck portion (25,26).

8. A food packaging container according to any one of claims 1 to 7, where each of said projections (21,22 or 23, 24;35,36;45 or 46) has a crimped neck portion.

9. A food packaging container according to any one of claims 1 to 6, wherein one of said projections (36) has a protruding wing portion (37) which deforms to provide pinching securement action when said pair of projections are joined together.

10. A food packaging container according to any one of claims 1 to 6, wherein said receptor projection (36) includes a protruding wing (37) that deforms upon sliding engagement with a wall portion (38) of said insertion projection.

11. A food packaging container according to any one of claims 1 to 10, wherein said base member panel portion (15) is a protruding pedestal having an annular sidewall that nests within said bubble portion of the body member.

12. A food packaging container according to any one of claims 1 to 11, further including hinge means (27;42) hingedly joining said base portion peripheral flange (17) and said body portion peripheral flange (18).

13. A method for providing a food packaging container (11;31;41), said method comprising:
thermoforming a base member (12;32;43) having a panel portion (15) for supporting a food product and a peripheral flange portion (17) generally surrounding said base member panel portion, said thermoforming step including thermoforming a projection (21,22,23 or 24;35 or 36;45 or 46) into said peripheral flange portion of the base member;
thermoforming a body member (13;33;44) having a bubble portion (14;34) for cooperating with the base member panel portion (15) to define a cavity to fully enclose the food product therewithin, said thermoforming step further including forming a peripheral flange portion (18) surrounding said body member bubble portion and thermoforming a projection (21,22,23 or 24;35 or 36;45 or 46) into said peripheral flange portion of the body member;
hermetically sealing together a portion of said base member peripheral flange (17) and a portion of said body member peripheral flange (18) to provide a peelable seal (16) along a perimeter that is closely spaced outside of said cavity, and subsequently;
inserting one of said thermoformed projections into the other of said thermoformed projections in order to snap lock said projections together, one of said projections being an insertion projection (21,23;35) and the other of said projections being a receptor projection (22,24;36), said pair of projections (21,22 or 23,24;35,36;45 or 46) providing for reclosure of the food packaging container, which reclosure is signalled by an audible snapping sound generated by reinsertion of said insertion projection (21,23;25) into said receptor projection (22,24;26).

14. A method according to claim 13, further including crimping at least one portion of at least one of said thermoformed projections in order to form a crimped portion thereof.

15. A method according to claim 14, wherein said crimping step takes place after said inserting step.

16. A method according to any one of claims 13 to 15, wherein only one of said two thermoforming steps includes forming a protruding wing portion of its respective projection.

17. A method according to any one of claims 13 to 16, further including hingedly attaching together respective ends of said peripheral flange portions.

18. A method according to any one of claims 13 to 17, wherein said hermetic sealing step is preceded by filling said cavity with a food product.

## Patentansprüche

1. Lebensmittelverpackungsbehälter (11;31;41), umfassend:
ein Basiselement (12;32;43) mit einem Feldteil (15) zum Tragen eines Lebensmittelerzeugnisses, und einem den besagten Feldteil des Basiselements allgemein umgebenden Umfangsflanschteil (17);
ein Körperelement (13;33;44) mit einem Blasenteil (14;34) zum Zusammenwirken mit dem Feldteil (15) des Basiselements zur Bildung eines Hohlraums zum vollständigen Umschließen des Lebensmittelerzeugnisses darin, wobei das besagte Körperelement weiter einen Umfangsflanschteil (18) einschließt, der den besagten Blasenteil des Körperelements allgemein umgibt;
eine abziehbare Abdichteinrichtung (16) zum Bereitstellen einer luftdichten Versiegelung des Umfangsflanschteils (17) des Basiselements mit dem Umfangsflanschteil (18) des Körperelements, nachdem das Lebensmittelerzeugnis in den Hohlraum gefüllt ist, wobei die besagte abziehbare Abdichteinrichtung (16) eine Begrenzung liefert, die allgemein in engem Abstand außerhalb des besagten Hohlraums angeordnet ist; und
Verschlußvorrichtungen zum Verrasten des besagten Basiselements mit dem besagten Körperelement, wobei die besagten Verschlußvorrichtungen mindestens ein Paar Vorsprünge (21,22 oder 23,24;35,36;45 oder 46) einschließen, wobei einer von dem besagten Paar Vorsprünge durch Wärmeformen in den besagten Umfangsflansch des Basiselements eingeformt worden ist, und der andere der besagten Vorsprünge durch Wärmeformen in den besagten Umfangsflansch des Körperelements eingeformt worden ist, wobei der besagte Vorsprung des Körperelements und der besagte Vorsprung des Basiselements an einer Stelle außerhalb der besagten abziehbaren Abdichteinrichtung in Deckung miteinander sind, wobei einer der besagten Vorsprünge (21,23;35) ein Einführvorsprung und ein anderer der besagten Vorsprünge (22,24;36) ein Aufnahmevorsprung ist, um den besagten Einführvorsprung aufzunehmen und mit ihm in Rasteingriff zu treten, wobei das besagte Paar von Vorsprüngen (21,22 oder 23,24;35,36;45 oder 46) für ein Wiederverschließen des Lebensmittelverpackungsbehälters sorgt, wobei dieses Wiederverschließen durch ein hörbares Einrastgeräusch signalisiert wird, das durch Wiedereinführen des besagten Einführvorsprungs (21,23;25) in den Aufnahmevorsprung (22,24;26) erzeugt wird.

2. Lebensmittelverpackungsbehälter nach Anspruch 1, dadurch gekennzeichnet, daß mindestens der besagte Einführvorsprung (21,23;35) einen gequetschten Teil enthält.

3. Lebensmittelverpackungsbehälter nach Anspruch 1 oder Anspruch 2, dadurch gekennzeichnet, daß sowohl der besagte Aufnahmevorsprung (22,24;36) und der besagte Einführvorsprung (21,23;35) einen gequetschten Teil enthalten.

4. Lebensmittelverpackungsbehälter nach Anspruch 1, dadurch gekennzeichnet, daß er weiter umfaßt:
einen gequetschten Teil sowohl des besagten Aufnahmevorsprungs (22,24;36) und des besagten Einführvorsprungs (21,23;35), wobei einer der besagten gequetschten Teile in einen anderen der besagten gequetschten Teile einführbar ist, wobei dieses Einführen von einem hörbaren Einrastzeichen begleitet ist.

5. Lebensmittelverpackungsbehälter nach einem beliebigen der Ansprüche 2 bis 4, dadurch gekennzeichnet, daß die besagten gequetschten Teile durch einen Quetschvorgang in den besagten, durch Wärmeformen geformten Vorsprüngen gebildet wurden, nachdem das besagte Basiselement (12;32;43) und Körperelement (13;33;44) zum Behälter zusammengesetzt sind.

6. Lebensmittelverpackungsbehälter nach einem beliebigen der Ansprüche 3 bis 5, dadurch gekennzeichnet, daß jeder der besagten gequetschten Teile ein im wesentlichen mittlerer Teil des jeweiligen Vorsprungs ist.

7. Lebensmittelverpackungsbehälter nach einem beliebigen der Ansprüche 1 bis 6, dadurch gekennzeichnet, daß jeder der besagten Vorsprünge (21,22 oder 23,24) eine im allgemeinen frackschleifenförmige Gestalt besitzt, die einen gequetschten mittleren Halsteil (25,26) einschließt.

8. Lebensmittelverpackungsbehälter nach einem beliebigen der Ansprüche 1 bis 7, dadurch gekennzeichnet, daß jeder der besagten Vorsprünge (21,22 oder 23,24;35,36;45 oder 46) einen gequetschten Halsteil aufweist.

9. Lebensmittelverpackungsbehälter nach einem beliebigen der Ansprüche 1 bis 6, dadurch gekennzeichnet, daß einer der besagten Vorsprünge (36) einen vorstehenden Flügelteil (37) aufweist, der sich verformt, um einen Klemmbefestigungsmechanismus zu schaffen, wenn das besagte Paar Vorsprünge miteinander verbunden wird.

10. Lebensmittelverpackungsbehälter gemäß einem beliebigen der Ansprüche 1 bis 6, dadurch gekennzeichnet, daß der besagte Aufnahmevorsprung (36) einen vorstehenden Flügel (37) einschließt, der sich bei einem gleitenden Eingriff mit einem Wandteil (38) des besagten Einführvorsprungs verformt.

11. Lebensmittelverpackungsbehälter nach einem beliebigen der Ansprüche 1 bis 10, dadurch gekennzeichnet, daß der besagte Feldteil (15) des Basiselements ein überstehender Sockel mit einer ringförmigen Seitenwand ist, die in dem besagten Blasenteil des Körperelements sitzt.

12. Lebensmittelverpackungsbehälter nach einem beliebigen der Ansprüche 1 bis 11, dadurch gekennzeichnet, daß er weiter eine Scharniereinrichtung (27;42) einschließt, welche den besagten Umfangsflansch (17) des Basisteils und den besagten Umfangsflansch (18) des Körperteils schwenkbar verbindet.

13. Verfahren zur Bereitstellung eines Lebensmittelverpackungsbehälters (11;31;41), wobei das besagte Verfahren umfaßt:
Wärmeformen eines Basiselements (12;32;43) mit einem Feldteil (15) zum Tragen eines Lebensmittelerzeugnisses und einem Umfangsflanschteil (17), welches den besagten Feldteil des Basiselements allgemein umgibt, wobei der besagte Schritt eines Wärmeformens ein Wärmeformen eines Vorsprungs (21,22,23 oder 24;35 oder 36;45 oder 46) in den besagten Umfangsflanschteil des Basiselements einschließt;
Wärmeformen eines Körperelements (13;33;44) mit einem Blasenteil (14;34) zum Zusammenwirken mit dem Feldteil (15) des Basiselements zur Bildung eines Hohlraums zum vollständigen Umschließen des Lebensmittelerzeugnisses darin, wobei der besagte Schritt eines Wärmeformens weiter ein Formen eines den besagten Blasenteil des Körperelements umgebenden Umfangsflanschteils (18) und ein Wärmeformen eines Vorsprungs (21,22,23 oder 24;35 oder 36;45 oder 46) in den besagten Umfangsflanschteil des Körperelements einschließt;
luftdichtes Miteinanderversiegeln eines Teils des besagten Umfangsflanschs (17) des Basiselements und eines Teils des besagten Umfangsflanschs (18) des Körperelements zum Bereitstellen einer abziehbaren Abdichtung (16) entlang einer Begrenzung, die in engem Abstand außerhalb des besagten Hohlraums angeordnet ist, und anschließend;
Einführen von einem der besagten durch Wärmeformen geformten Vorsprünge in den anderen der besagten durch Wärmeformen geformten Vorsprünge, um die besagten Vorsprünge miteinander zu verrasten, wobei einer der besagten Vorsprünge ein Einführvorsprung (21,23;35) ist, und der andere der besagten Vorsprünge ein Aufnahmevorsprung (22,24;36) ist, wobei das besagte Paar Vorsprünge (21,22 oder 23,24;35,36;45 oder 46) für ein Wiederverschließen des Lebensmittelverpackungsbehälters sorgt, wobei dieses Wiederverschließen durch ein hörbares Einrastgeräusch signalisiert wird, das durch Wiedereinführen des besagten Einführvorsprungs (21,23;25) in den besagten Aufnahmevorsprung (22,24;26) erzeugt wird.

14. Verfahren nach Anspruch 13, dadurch gekennzeichnet, daß es weiter ein Quetschen von mindestens einem Teil mindestens eines der besagten, durch Wärmeformen geformten Vorsprünge einschließt, um einen gequetschten Teil desselben zu bilden.

15. Verfahren nach Anspruch 14, dadurch gekennzeichnet, daß der besagte Schritt eines Quetschens nach dem besagten Schritt eines Einführens stattfindet.

16. Verfahren nach einem beliebigen der Ansprüche 13 bis 15, dadurch gekennzeichnet, daß nur einer der besagten zwei Schritte eines Wärmeformens ein Formen eines überstehenden Flügelteils seines jeweiligen Vorsprungs einschließt.

17. Verfahren nach einem beliebigen der Ansprüche 13 bis 16, dadurch gekennzeichnet, daß es weiter ein schwenkbares Miteinaderverbinden von jeweiligen Enden der besagten Umfangsflanschteile einschließt.

18. Verfahren nach einem beliebigen der Ansprüche 13 bis 17, dadurch gekennzeichnet, daß dem Schritt eines luftdichten Versiegelns ein Befüllen des besagten Hohlraums mit einem Lebensmittelerzeugnis vorangeht.

## Revendications

1. Récipient d'emballage alimentaire (11; 31; 41) comprenant :
un organe de base (12; 32; 43) présentant une partie en panneau (15) sevrant à supporter un produit alimentaire et une partie en rebord périphérique (17) entourant globalement ladite partie en panneau d'organe de base;
un organe de corps (13; 33; 44) présentant une partie cloquée (14; 34), servant à coopérer avec la partie en panneau d'organe de base (15) afin de définir une cavité permettant d'enfermer complètement en son sein le produit alimentaire, ledit organe de corps comprenant en outre une partie en rebord périphérique (18) entourant globalement ladite partie cloquée de l'organe de corps;
un moyen de scellage (16) pelable, servant à établir une fermeture hermétique de la partie en rebord périphérique d'organe de base (17) sur la partie en rebord périphérique d'organe de corps (18), après que le produit alimentaire a été placé dans la cavité, ledit moyen de scellage pelable (16) présentant un périmètre qui est globalement un peu espacé de ladite cavité vers l'extérieur ; et
un moyen de verrouillage servant à verrouiller par encliquetage ledit organe de base audit organe de corps, ledit moyen de verrouillage comprenant au moins un couple de saillies (21, 22 ou 23, 24; 35, 36; 45 ou 46); l'une des saillies dudit couple ayant été thermoformée dans ledit rebord périphérique d'organe de base et l'autre saillie parmi lesdites saillies ayant été thermoformée dans ledit rebord périphérique d'organe de corps, ladite saillie d'organe de corps et ladite saillie d'organe de base coïncidant entre elles à un emplacement situé à l'extérieur dudit moyen de scellage pelable, l'une desdites saillies (21, 23; 35) étant une saillie d'insertion et une autre saillie parmi lesdites saillies (22, 24; 36) étant une saillie de réception, servant à recevoir ladite saillie d'insertion et à entrer en contact d'encliquetage avec elle, ledit couple de saillies (21, 22 ou 23, 24; 35, 36; 45 ou 46) permettant la refermeture du récipient d'emballage alimentaire, cette refermeture étant signalée par un son d'encliquetage audible, produit par la réinsertion de ladite saillie d'insertion (21, 23; 25) dans la saillie de réception (22, 24; 26).

2. Récipient d'emballage alimentaire selon la revendication 1, dans lequel au moins ladite saillie d'insertion (21, 23; 35) comprend une partie de sertissage.

3. Récipient d'emballage alimentaire selon la revendication 1 ou 2, dans lequel chacune desdites saillies de réception (22, 24; 36) et desdites saillies d'insertion (21, 23; 35) comprend une partie de sertissage.

4. Récipient d'emballage alimentaire selon la revendication 1, comprenant en outre :
une partie de sertissage de chacune desdites saillies de réception (22, 24; 36) et desdites saillies d'insertion (21, 23; 35), l'une desdites parties de sertissage pouvant être insérée dans une autre partie parmi lesdites parties de sertissage, cette insertion étant accompagnée d'un signal d'encliquetable audible.

5. Récipient d'emballage alimentaire selon l'une quelconque des revendications 2 à 4, dans lequel lesdites parties de sertissage ont été formées dans lesdites saillies thermoformées par une action de sertissage, lorsque ledit organe de base (12; 32; 43) et ledit organe de corps (13; 33; 44) sont assemblés ensemble dans le récipient.

6. Récipient d'emballage alimentaire selon l'une quelconque des revendications 3 à 5, dans lequel chacune desdites parties de sertissage est une partie pratiquement centrale de la saillie respective.

7. Récipient d'emballage alimentaire selon l'une quelconque des revendications 1 à 6, dans lequel chacune desdites saillies (21, 22 ou 23, 24) présente une forme globale de noeud papillon comprenant une partie centrale de sertissage en col (25, 26).

8. Récipient d'emballage alimentaire selon l'une quelconque des revendications 1 à 7, dans lequel chacune desdites saillies (21, 22 ou 23, 24; 35, 36; 45 ou 46) présente une partie de sertissage en col.

9. Récipient d'emballage alimentaire selon l'une quelconque des revendications 1 à 6, dans lequel l'une desdites saillies (36) présente une partie en aile (37) saillante, qui se déforme afin d'exercer une action de fixation par pincement lorsque ledit couple de saillies est relié ensemble.

10. Récipient d'emballage alimentaire selon l'une quelconque des revendications 1 à 6, dans lequel ladite saillie de réception (36) comprend une aile saillante (37) qui se déforme lors d'un contact coulissant avec une partie en paroi (38) de ladite saillie d'insertion.

11. Récipient d'emballage alimentaire selon l'une quelconque des revendications 1 à 10, dans lequel ladite partie en panneau d'organe de base (15) est un socle saillant présentant une paroi latérale annulaire qui s'emboîte dans ladite partie cloquée de l'organe de corps.

12. Récipient d'emballage alimentaire selon l'une quelconque des revendications 1 à 11, comprenant en outre des moyens d'articulation (27; 42) reliant de façon articulée ledit rebord périphérique de partie de base (17) audit rebord périphérique de partie de corps (18).

13. Procédé de fabrication d'un récipient d'emballage alimentaire (11; 31; 41), ledit procédé comprenant :
le thermoformage d'un organe de base (12; 32; 43) présentant une partie en panneau (15) servant à supporter un produit alimentaire et une partie en rebord périphérique (17) entourant globalement ladite partie en panneau d'organe de base, ladite étape de thermoformage comprenant le thermoformage d'une saillie (21, 22, 23 ou 24; 35 ou 36; 45 ou 46) dans ladite partie en rebord périphérique de l'organe de base;
le thermoformage d'un organe de corps (13; 33; 44) présentant une partie cloquée (14; 34) destinée à coopérer avec la partie en panneau d'organe de base (15), afin de définir une cavité servant à enfermer complètement en son sein le produit alimentaire, ladite étape de thermoformage comprenant en outre le formage d'une partie en rebord périphérique (18) entourant ladite partie cloquée d'organe de corps et le thermoformage d'une saillie (21, 22, 23 ou 24; 35 ou 36; 45 ou 46) dans ladite partie en rebord périphérique de l'organe de corps;
le scellage hermétique entre une partie dudit rebord périphérique d'organe de base (17) et une partie dudit rebord périphérique d'organe de corps (18), afin de former une jonction (16) pelable le long d'un périmètre qui est un peu espacé de ladite cavité vers l'extérieur, et ensuite;
l'insertion de l'une desdites saillies thermoformées dans l'autre desdites saillies thermoformées, en vue de verrouiller par encliquetage lesdites saillies entre elles, l'une desdites saillies étant une saillie d'insertion (21, 23; 35) et l'autre desdites saillies étant une saillie de réception (22, 24; 36), ledit couple de saillies (21, 22 ou 23, 24, 25; 35, 36; 45 ou 46) permettant la refermeture du récipient d'emballage alimentaire, cette refermeture étant signalée par un son d'encliquetage audible, produit par la réinsertion de ladite saillie d'insertion (21, 23; 25) dans ladite saillie de réception (22, 24; 26).

14. Procédé selon la revendication 13, comprenant en outre le sertissage d'au moins une partie d'au moins l'une desdites saillies thermoformées, en vue de former une partie sertie de cette dernière.

15. Procédé selon la revendication 14, dans lequel ladite étape de sertissage a lieu après ladite étape d'insertion.

16. Procédé selon l'une quelconque des revendications 13 à 15, dans lequel une seule desdites étapes de thermoformage comprend le formage d'une partie en aile saillante pour la saillie correspondante.

17. Procédé selon l'une quelconque des revendications 13 à 16, comprenant en outre une fixation mutuelle des extrémités respectives desdites parties en rebord périphérique pour former une articulation.

18. Procédé selon l'une quelconque des revendications 13 à 17, dans lequel ladite étape de scellage hermétique est précédée du remplissage de ladite cavité avec un produit alimentaire.
